# EUROPEAN PATENT APPLICATION

(11) **EP 4 807 923 A1**
(43) Date of publication of application: **16.09.2026**
(21) Application number: 24888041.1
(22) Date of filing: 07.11.2024
(51) Int. Cl.: H02B 1/32, A62C 3/00, H02G 3/04

(54) **ENERGY STORAGE SYSTEM**

(30) Priority: 10.11.2023 CN 202323035654 U
(71) Applicant: Sungrow Power Supply Co., Ltd., Hefei, Anhui 230088 (CN)
(72) Inventor: LIU, Xiaojun, Hefei, Anhui 230088 (CN)
(74) Representative: Epping - Hermann - Fischer
(86) International application number: PCT/CN2024/130464
(87) International publication number: WO 2025/098430

(57) **Abstract**

The present utility model relates to the technical field of energy storage systems. Provided is an energy storage system, comprising an energy storage cabinet and an accommodating member, wherein the accommodating member is arranged inside the energy storage cabinet, and the accommodating member is used for accommodating at least two fire-fighting cables of different specifications; and the accommodating member is made of a fire-resistant and flame-retardant material. The fire-fighting cables of different specifications in the energy storage system can be mounted by means of one accommodating member, such that the present utility model can be applied to the laying and mounting operation of fire-fighting cables of different specifications in various regions, and has a high degree of universality.

## Description

The present application claims priority to the Chinese Patent Application No. 202323035654.1, titled "ENERGY STORAGE SYSTEM", filed on November 10, 2023 with the China National Intellectual Property Administration, which is incorporated herein by reference in its entirety.

### FIELD

The present application relates to the field of energy storage technology, and in particular, to an energy storage system.

### BACKGROUND

The energy storage system is mainly used to store and release electric energy. It mainly includes a battery cabinet and a fire-fighting system. The fire-fighting system mainly includes fire-fighting cables, a control cabinet and various fire-fighting devices. Some of the fire-fighting cables are used to connect fire-fighting devices to the control cabinet, whereas other fire-fighting cables may serve as control wires, signal wires and the like that are connected to the control cabinet. The fire-fighting cables are generally arranged in metal rigid or flexible pipes for safety protection.

However, due to differences in fire-fighting standards across various regions and differences in the specifications and dimensions of fire-fighting cables, the combinations of rigid pipes or flexible pipes used in equivalent energy storage systems are different, which results in poor universality of the pipelines for accommodating the fire-fighting cables therein and reduces the routing efficiency of the fire-fighting cables.

### SUMMARY

The issue to be addressed by the present application is the poor universality of the accommodating member for accommodating fire-fighting cables in the existing energy storage system.

In order to address the above issue, an energy storage system is provided according to the present application, including:
an energy storage cabinet; and
an accommodating member, which is arranged inside the energy storage cabinet and configured to accommodate at least two fire-fighting cables of different specifications.

The accommodating member is made of a fire-resistant and flame-retardant material.

Furthermore, the energy storage system further includes a partition plate, which is mounted inside the accommodating member to separate the fire-fighting cables carrying high and low voltages.

Furthermore, the energy storage cabinet includes a battery compartment, a battery cabinet, a control compartment, a control cabinet and a fire-fighting device. The battery cabinet is arranged within the battery compartment, and the control cabinet is arranged within the control compartment. A portion of the accommodating member is located in the battery compartment, and another portion of the accommodating member is located in the control compartment.

The accommodating member is provided with a mounting site and a cable-passing hole. The mounting site is configured for mounting the fire-fighting device, and the cable-passing hole is configured for passage of a fire-fighting cable connected to the fire-fighting device, and an end of the fire-fighting cable away from the fire-fighting device extends into the control compartment to be connected to the control cabinet.

Furthermore, the accommodating member includes a groove body and a cover plate. The groove body is of a shell structure that is open at both ends in a first direction and a top thereof. The groove body is configured for routing the fire-fighting cables, and the cover plate is configured to cover the top of the groove body.

A first mounting hole is provided in the cover plate at a position aligned with the mounting site, so that a first fastener is inserted through both the fire-fighting device and the first mounting hole to fix the fire-fighting device onto the cover plate.

Furthermore, the accommodating member further includes multiple cable-fixing structures, which are configured to fix the fire-fighting cable. At least some of the cable-fixing structures are arranged in the groove body and spaced apart in a direction perpendicular to the first direction. A distance between two adjacent cable-fixing structures arranged in the direction perpendicular to the first direction, and/or a distance between a sidewall of the groove body and the cable-fixing structure adjacent to the sidewall is greater than a diameter of the corresponding fire-fighting cable.

Furthermore, each cable-fixing structure is provided with a cable-tying hole, and/or a cable-tying hole is provided between each cable-fixing structure and the groove body.

Furthermore, in case that the cable-tying hole is provided between each cable-fixing structure and the groove body, the cable-fixing structure is a cable-tying rib formed by stamping and bending the groove body. The cable-tying hole is formed between a bent part of the cable-tying rib and the groove body.

Furthermore, each of multiple accommodating members further includes an abutting plate arranged at an end of the groove body of the accommodating member in the first direction. The sidewall of the groove body is formed with a first notch for passage of the fire-fighting cables. The abutting plate is formed with a second notch for passage of the fire-fighting cables.

When the groove body of one accommodating member is aligned and assembled at an angle with the groove body of another accommodating member, the first notch of the groove body of the one accommodating member is aligned with the second notch of the groove body of the another accommodating member. When the groove bodies of two adjacent accommodating members are aligned and assembled end-to-end in the first direction, the second notches of the groove bodies of the two adjacent accommodating members are aligned with and connected to each other.

Furthermore, the accommodating member further includes a sealing plate. The cover plate is provided with an operation window, and the sealing plate is detachably mounted at the operation window.

Furthermore, the sidewall of the groove body is bent inwardly towards an interior of the groove body at different locations along the open top to form multiple connecting plates, which are arranged parallel to the cover plate, so that a second fastener is inserted through both the cover plate and the connecting plate to fix the cover plate onto the groove body.

Furthermore, the accommodating member passes through a partition wall between the control compartment and the battery compartment adjacent to the control compartment, and the accommodating member is connected to the partition wall by seal welding.

Compared with the conventional technology, the accommodating member according to the present application is mounted inside the energy storage cabinet, and is configured for internally routing at least two fire-fighting cables of different specifications. In other words, fire-fighting cables of different specifications in the energy storage system may be mounted by virtue of a single accommodating member, so that the present application is applicable to the routing and mounting of the fire-fighting cables of different specifications across various regions, offering high universality.

In addition, since the accommodating member is made of the fire-resistant and flame-retardant material, when the fire-fighting cable is concealed and mounted inside the accommodating member, the fire-resistant and flame-retardant accommodating member can not only provide fire resistance and flame retardancy to the fire-fighting cable but also prevent a fire from spreading if the fire occurs on the fire-fighting cable.

### BRIEF DESCRIPTION OF THE DRAWINGS

FIG. 1 is a schematic structural view of an energy storage system in an embodiment of the present application;
FIG. 2 is a schematic structural view of an accommodating member and a partition plate in an embodiment of the present application;
FIG. 3 is a schematic structural view of the accommodating member and a fire-fighting device in an embodiment of the present application;
FIG. 4 is an exploded schematic structural view of the accommodating member in an embodiment of the present application;
FIG. 5 is an enlarged schematic structural view of part B in FIG. 4;
FIG. 6 is a schematic view showing connection between two adjacent accommodating members in an embodiment of the present application;
FIG. 7 is an enlarged schematic structural view of part B in FIG. 1; and
FIG. 8 is a schematic structural view showing an accommodating member vertically mounted to a partition wall of the energy storage system in an embodiment of the present application.

### Numeral references are listed as follows:

| | | | |
|---|---|---|---|
| 1. | energy storage cabinet; | 11. | battery compartment; |
| 12. | control compartment; | 13. | fire-fighting device; |
| 14. | partition wall; | 2. | accommodating member; |
| 21. | cover plate; | 211. | cable-passing hole; |
| 212. | first mounting hole; | 213. | operation window; |
| 22. | groove body; | 221. | first notch; |
| 222. | fixing hole; | 23. | cable-fixing structure; |
| 24. | abutting plate; | 241. | second notch; |
| 25. | sealing plate; | 26. | connecting plate; |
| 3. | partition plate. | | |

### DETAILED DESCRIPTION OF THE EMBODIMENTS

In order to make the above objects, features and advantages of the present application more obvious and easy to understand, the specific embodiments of the present application are described in detail below with reference to the accompanying drawings.

It should be noted that, in the XYZ coordinate system provided herein, the positive direction of X-axis represents the rightward direction, and the negative direction of X-axis represents a leftward direction; the positive direction of Y-axis represents the forward direction, and the negative direction of Y-axis represents the backward direction; the positive direction of Z-axis represents the upward direction, and the negative direction of Z-axis represents the downward direction. Meanwhile, it should be noted that, the terms such as "first" and "second" in the specification, the claims and the accompanying drawings of the present application are intended to distinguish similar objects, but are not necessarily used to describe a specific sequence or a precedence order. It should to be understood that such terms herein may be interchanged in proper circumstances, so that the embodiments of the present application described herein can be implemented in sequences other than those illustrated or described herein.

In the description of the present application, it should be pointed out that, unless otherwise explicitly specified and defined, terms such as "arrange", "mount", "couple" and "connect" should be understood broadly. For example, the connection may be a fixed connection, a detachable connection, or an integrated connection; or may be a mechanical connection; or may be a direct connection, or an indirect connection achieved via an intermediate medium; or may be an internal communication between two elements. For those skilled in the art, the specific meaning of the above terms in the present application may be understood based on specific circumstances.

In the description of the specification, the description with reference to the terms such as "embodiments", "an embodiment", "an example" means that the specific features, structures, materials or characteristics described in conjunction with the embodiment or example are included in at least one embodiment or example of the present application. In the specification, schematic expressions of the above terms do not necessarily refer to the same embodiments or examples. Further, the specific features, structures, materials or characteristics described herein can be combined in one or more embodiments or examples in an appropriate manner.

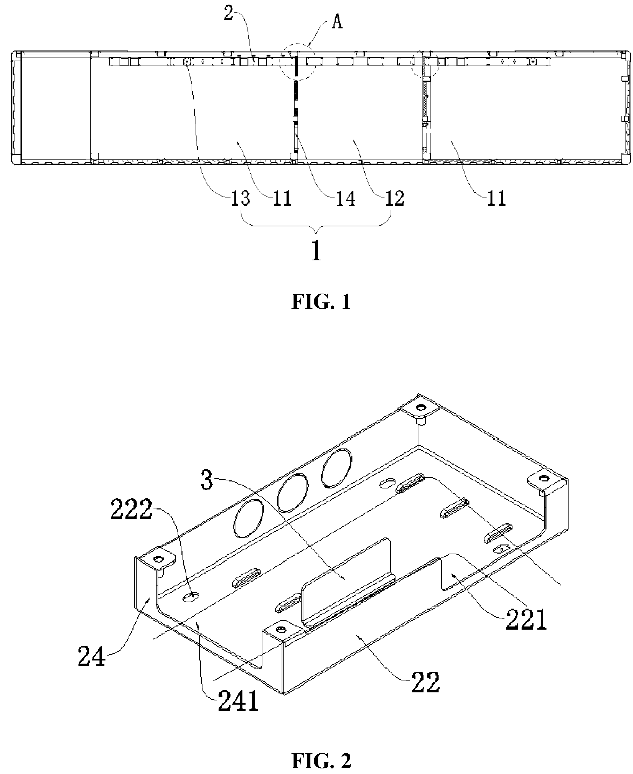

In order to address the above technical issues, referring to FIG. 1, an energy storage system is provided according to an embodiment of the present application, including:
an energy storage cabinet 1; and
an accommodating member 2, which is arranged inside the energy storage cabinet 1 and is configured to accommodate at least two fire-fighting cables of different specifications.

The accommodating member 2 is made of a fire-resistant and flame-retardant material.

It should be noted that the energy storage cabinet 1 at least includes a battery compartment 11, a battery cabinet, a control compartment 12, a control cabinet and a fire-fighting device 13. The battery cabinet is mounted inside the battery compartment 11, and the control cabinet is mounted inside the control compartment 12. The fire-fighting device 13 may be mounted inside the battery compartment 11 and/or inside the control compartment 12. The battery compartment 11 may be understood as a compartment or room for mounting the battery cabinet, and the control compartment 12 may be understood as a compartment or room for mounting the control cabinet.

The accommodating member 2 is mounted within the battery compartment 11 and the control compartment 12. The accommodating member 2 is configured for internally routing and mounting various fire-fighting cables leading to the control cabinet inside the control compartment 12. For example, the fire-fighting cables may include cables electrically connected to the fire-fighting device 13, as well as control or signal wires electrically connected to a power conversion system (PCS), a connecting device such as a connector, a local controller (LC), etc.

The accommodating member 2 is made of a fire-resistant and flame-retardant material. The fire-resistant and flame-retardant material refers to a type of material that has high thermal stability and oxidation resistance in a high-temperature environment. In the event of a fire in the energy storage system, the accommodating member 2 can isolate the fire-fighting cables therein from the fire source, preventing direct contact between the fire source and the fire-fighting cables.

Specifically, the fire-resistant and flame-retardant material in this embodiment may maintain structural integrity and stable physical and chemical properties in a high-temperature environment at 650°C or above. Preferably, the fire-resistant and flame-retardant material in this embodiment may be a steel plate, a galvanized steel plate, a stainless steel material, or the like. The type of the fire-resistant and flame-retardant material is not specifically limited in this embodiment. Any accommodating member 2 made of a material with fire-resistant and flame-retardant properties is applicable to this technical solution and will not be described in detail herein. In the present application, the accommodating member 2 is mounted inside the energy storage cabinet 1, and the accommodating member 2 is configured for internally routing at least two fire-fighting cables of different specifications. In other words, fire-fighting cables of different specifications in the energy storage system may be mounted by virtue of a single accommodating member 2. Thus, the present application is applicable to the routing and mounting of the fire-fighting cables of different specifications across various regions, offering high universality.

In addition, since the accommodating member 2 is made of the fire-resistant and flame-retardant material, when the fire-fighting cable is concealed and mounted inside the accommodating member 2, the fire-resistant and flame-retardant accommodating member 2 can not only provide fire resistance and flame retardancy to the fire-fighting cable but also prevent a fire from spreading if the fire occurs on the fire-fighting cable.

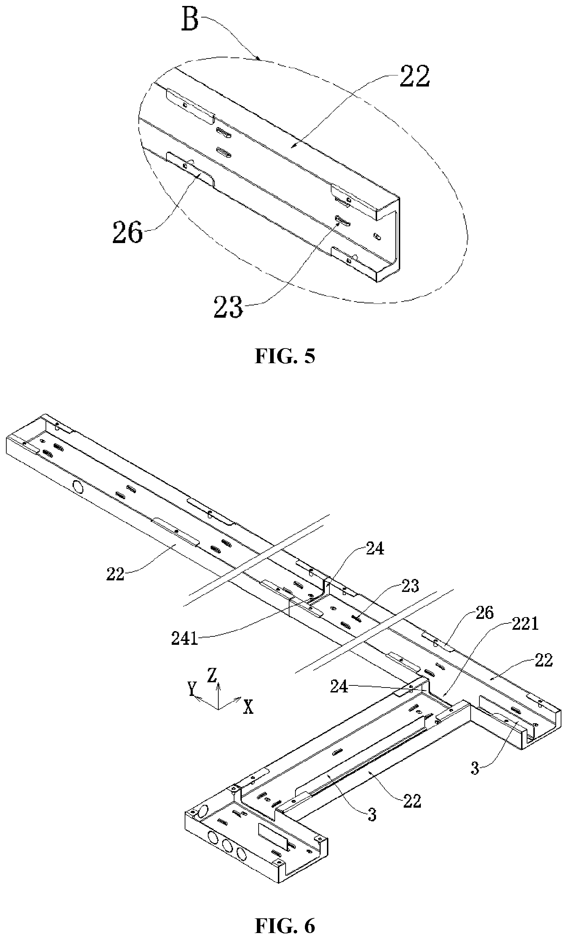

In an embodiment of the present application, as shown in FIGS. 2 and 6, the energy storage system further includes a partition plate 3, which is mounted inside the accommodating member 2 to separate the fire-fighting cables carrying high and low voltages.

By adding a partition plate 3 inside the accommodating member 2 to divide the interior of the accommodating member 2 into two cavities, fire-fighting cables of different specifications, e.g., different voltage levels (i.e., high and low voltages), may be placed in different cavities. This achieves isolation between the fire-fighting cables carrying high and low voltages, ensuring safe operation of the fire-fighting cables carrying high and low voltages. The partition plate 3 may be arranged at an end of the accommodating member 2 in a first direction. Alternatively, the partition plate 3 may extend from one end to the other end of the accommodating member 2 in the first direction. The first direction is consistent with the Y-axis direction in the coordinate system shown in FIG. 6.

The partition plate 3 may be fixed in the accommodating member 2 by welding, snap-fitting, etc.

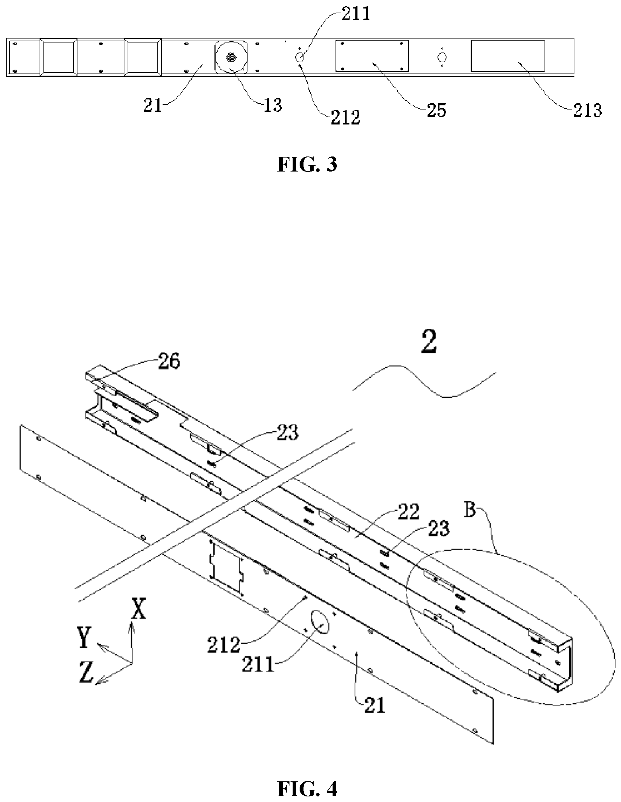

In an embodiment of the present application, as shown in FIGS. 1 and 3, the energy storage cabinet 1 includes a battery compartment 11, a battery cabinet, a control compartment 12, a control cabinet and a fire-fighting device 13. The battery cabinet is arranged within the battery compartment 11, and the control cabinet is arranged within the control compartment 12. A portion of the accommodating member 2 is located in the battery compartment 11, and another portion of the accommodating member 2 is located in the control compartment 12.

The accommodating member 2 is provided with a mounting site and a cable-passing hole 211. The mounting site is configured for mounting the fire-fighting device 13, and the cable-passing hole 211 is configured for passage of the fire-fighting cable connected to the fire-fighting device 13. An end of the fire-fighting cable away from the fire-fighting device 13 extends into the control compartment 12 to be connected to the control cabinet.

It should be noted that, in FIG. 1, the control cabinet may include two battery compartments 11 and a single control compartment 12. The two battery compartments 11 are arranged on both sides of the control compartment 12, respectively. The fire-fighting device 13 may be mounted at the mounting site in the accommodating member 2 located within the battery compartment 11. One end of the fire-fighting cable passes through the cable-passing hole 211 of the accommodating member 2 and is electrically connected to the fire-fighting device 13, and the other end of the fire-fighting cable away from the fire-fighting device 13 is routed within the accommodating member 2 and extends into the control compartment 12. In other words, the fire-fighting cables in different battery compartments 11 are converged into the control compartment 12 through the accommodating member 2 and are electrically connected to the control cabinet.

The accommodating member 2 may be of a shell structure being rectangular or in any other shape. Any shell structure allowing the passage of the fire-fighting cable is applicable to this technical solution and will not be specifically limited herein. The accommodating member 2 is provided with a mounting site for the fire-fighting device 13. When the fire-fighting device 13 is mounted on the accommodating member 2, the fire-fighting cable connected to the fire-fighting device 13 may pass through the cable-passing hole 211 into the accommodating member for routing. Therefore, the accommodating member 2 provides a mounting foundation for the fire-fighting device 13, eliminating the need for additional mounting sites elsewhere and fully utilizing a surface space of the accommodating member 2. Furthermore, the fire-fighting device 13 may conceal the fire-fighting cable connected to it and the cable-passing hole 211, which prevents the exposure of the fire-fighting cable that passes through the cable-passing hole 211 and avoids external dust from entering the accommodating member 2, thereby reducing the frequency of maintenance accordingly.

In an embodiment of the present application, as shown in FIGS. 3 and 4, the accommodating member 2 includes a groove body 22 and a cover plate 21. The groove body 22 is of a shell structure that is open at both ends in the first direction and a top thereof. The groove body 22 is configured for routing the fire-fighting cable, and the cover plate 21 is configured to cover the top of the groove body 22.

A first mounting hole 212 is formed in the cover plate 21 at a position aligned with the mounting site. A first fastener is inserted through both the fire-fighting device 13 and the first mounting hole 212 to fix the fire-fighting device 13 onto the cover plate 21.

The fire-fighting device 13 may be fixedly mounted on the cover plate 21 by a fastener. Specifically, the fire-fighting device 13 is placed at the mounting site on the cover plate 21, and then the first fastener passes through both the fire-fighting device 13 and the first mounting hole 212 formed in the cover plate 21, thereby rapidly fixing the fire-fighting device 13 onto the cover plate 21. There may be multiple first mounting holes 212, which are arranged around the cable-passing hole 211, so that the fire-fighting device 13 may be more stably mounted on the accommodating member 2.

Of course, the fire-fighting device 13 may be fixed to the cover plate 21 in other ways. For example, the fire-fighting device 13 may be adhered to the cover plate 21 by double-sided adhesive tape. Alternatively, the fire-fighting device 13 may be mounted on the cover plate 21 by snap-fitting. No specific limitations are imposed herein.

In an embodiment of the present application, as shown in FIGS. 4 to 6, the accommodating member 2 further includes multiple cable-fixing structures 23, which are configured to fix the fire-fighting cable. At least some of the cable-fixing structures 23 are arranged in the groove body 22 and spaced apart in a direction perpendicular to the first direction. A distance between two adjacent cable-fixing structures 23 arranged in the direction perpendicular to the first direction, and/or a distance between a sidewall of the groove body 22 and the cable-fixing structure 23 adjacent thereto is greater than a diameter of the fire-fighting cable.

It should be noted that the first direction is consistent with the Y-axis direction in the coordinate system of FIGS. 4 and 6, whereas the direction perpendicular to the first direction is consistent with the direction of the X axis in FIGS. 4 and 6. The groove body 22 is open at both ends in the Y-axis direction, facilitating the passage of the fire-fighting cable. A part of the groove body 22 in the positive Z-axis direction in the coordinate system of FIG. 6 represents the top of the groove body 22, whereas a part of the groove body 22 in the negative Z-axis direction in the coordinate system of FIG. 6 represents the bottom of the groove body 22. The sidewalls of the groove body 22 refer to those that are perpendicular to the first direction.

The groove body 22 may be of a rectangular shell structure or a shell structure of other shapes. Any shell structure allowing the passage of the fire-fighting cable is applicable to this technical solution and will not be specifically limited herein. The sentence "the cable-fixing structure 23 is configured to fix the fire-fighting cable" refers to that the cable-fixing structure 23 may serve to directly fix the fire-fighting cable or, cooperate with a cable tie or the groove body 22 to fix the fire-fighting cable.

If the groove body 22 in a single accommodating member 2 has a relatively short length, multiple cable-fixing structures 23 are arranged and mounted in the groove body 22 in the direction perpendicular to the first direction. These cable-fixing structures 23 are not only configured to fix the fire-fighting cables, but also separate different types of fire-fighting cables. As shown in FIG. 4, if the groove body 22 in a single accommodating member 2 has a relatively long length, some of the cable-fixing structures 23 are arranged and mounted in the groove body 22 in the direction perpendicular to the first direction, and some other cable-fixing structures 23 are mounted in the groove body 22 and spaced apart in the first direction. This configuration not only separates different types of fire-fighting cables, but also allows for multiple bundling and fixing operations at various sections of the same fire-fighting cable in the first direction, so that the fire-fighting cable may be fixed more firmly and flexibly.

In an embodiment of the present application, as shown in FIG. 5, each cable-fixing structure 23 is formed with a cable-tying hole, and/or a cable-tying hole is formed between the cable-fixing structure 23 and the groove body 22.

The cable-tying hole may be positioned in three ways. First, the cable-tying hole is directly formed in the cable-fixing structure 23. Second, the cable-tying hole is formed at the connection between the cable-fixing structure 23 and the groove body 22. Third, the cable-tying holes are provided at the connection between the cable-fixing structure 23 and the groove body 22 as well as the cable-fixing structure 23. After the fire-fighting cable is mounted inside the groove body 22, a cable-tying component may pass through the cable-tying hole to fix the fire-fighting cable inside the groove body 22, thereby achieving the mounting and fixation of the fire-fighting cable. The cable-tying component may be a cable tie, a rope or the like, which is not specifically limited herein.

In an embodiment of the present application, as shown in FIG. 5, when the cable-tying hole is provided at the junction of the cable-fixing structure 23 and the groove body 22, the cable-fixing structure 23 is a cable-tying rib formed by stamping and bending the groove body 22. The cable-tying hole is formed between the bent part of the cable-tying rib and the groove body 22.

The cable-tying rib may be processed in the following manner. For example, the cable-tying rib is formed by stamping and bending a part of the bottom of the groove body 22. In this case, the cable-tying hole is formed between the bent part of the cable-tying rib and the groove body 22. This approach effectively enhances the mechanical strength of the cable-tying rib and the groove body 22, thereby extending the service life of the cable-tying rib.

In an embodiment of the present application, as shown in FIG. 6, the accommodating member 2 further includes an abutting plate 24. The sidewall of the groove body 22 is formed with a first notch 221 for passage of the fire-fighting cable. The abutting plate 24 is arranged at the end of the groove body 22 in the first direction, and the abutting plate 24 is formed with a second notch 241 for passage of the fire-fighting cable.

When one groove body 22 is aligned and assembled at an angle with another groove body 22, the first notch 221 of the one groove body 22 is aligned with and connected to the second notch 241 of the other groove body 22. When two adjacent groove bodies 22 are assembled end-to-end in the first direction, the second notches 241 of the two adjacent groove bodies 22 are aligned with and connected to each other.

By positioning the abutting plate 24 at the end of the groove body 22 in the first direction, the axis of the groove body 22 in the first direction is perpendicular to the abutting plate 24. In other words, the extension direction of the abutting plate 24 is consistent with the second direction, thereby improving the strength of the accommodating member 2 in the second direction (widthwise direction).

Based on different mounting scenarios, for example, in a compartment or room where the accommodating members 2 are required to turn, in other words, where one accommodating member 2 is assembled at an angle with another accommodating member 2, a first cable-passing opening formed in the sidewall of one accommodating member 2 in the second direction is aligned with and connected to a second cable-passing opening formed at the end of another groove body 22 in the first direction. Subsequently, the fire-fighting cable may be routed along the accommodating member 2 in the first direction (lengthwise direction), and sequentially passes through the first cable-passing opening of the one accommodating member 2 and the second cable-passing opening of the another accommodating member 2, thereby achieving a turn of the fire-fighting cable inside the accommodating members 2. The angle between two adjacent accommodating members 2 may be 90 degrees or any other value.

As shown in FIG. 2, multiple fixing holes 222 are provided and spaced apart from each other in the bottom of the groove body 22. Rivets or bolts may be respectively inserted through the fixing holes 222 of the groove body 22 to fix the accommodating member 2 to a mounting point such as a wall.

After the groove bodies 22 of two accommodating members 2 are aligned and assembled at an angle, rivets or bolts may be respectively inserted through the fixing holes 222 of the groove bodies 22 to fix the groove bodies 22 to a mounting point such as a wall. Alternatively, rivets or bolts may be inserted through the sidewall of one groove body 22 in the second direction and an abutting plate 24 arranged at the end of the other groove body 22, thereby fixing the two aligned accommodating members 2.

If the cable needs to pass through different rooms in a straight line, multiple accommodating members 2 are arranged and assembled end-to-end in the first direction to increase the overall length of the accommodating members 2. Subsequently, the fire-fighting cable may be routed along of the accommodating members 2 in the first direction and pass through different second cable-passing openings of various groove bodies 22, achieving straight-line routing of the fire-fighting cable.

After the groove bodies 22 of two accommodating members 2 are aligned and assembled in the first direction, rivets or bolts may be respectively inserted through the fixing holes 222 of the groove bodies 22 to fix the groove bodies 22 to a mounting point such as a wall. Alternatively, rivets or bolts may be inserted through the abutting plates 24 arranged at the ends of the two groove bodies 22, thereby fixing the two aligned accommodating members 2.

The abutting plate 24 may be integrated with the groove body 22, thereby further improving the overall strength of the accommodating member 2.

In an embodiment of the present application, as shown in FIG. 3, the accommodating member 2 further includes a sealing plate 25. The cover plate 21 is provided with an operation window 213, and the sealing plate 25 is detachably mounted at the operation window 213.

By providing an operation window 213 in the cover plate 21, it is convenient for an operator to perform operations such as threading and maintenance of the fire-fighting cable through the operation window 213. After the threading or maintenance operation is completed, the sealing plate 25 may be mounted at the operation window 213 to seal the operation window 213, thereby preventing foreign matters from entering the interior of the accommodating member 2.

The sealing plate 25 may be a mounting plate with an adhesive strip, enabling the mounting plate to be rapidly disassembled and assembled at the operation window 213 formed in the cover plate 21 via the adhesive strip.

In an embodiment of the present application, as shown in FIGS. 5 and 6, the sidewall of the groove body 22 is bent inwardly towards the interior of the groove body 22 at different locations along the open top to form multiple connecting plates 26, which are arranged parallel to the cover plate 21. A second fastener is inserted through the cover plate 21 and the connecting plate 26 to fix the cover plate 21 to the groove body 22.

The sidewall of the groove body 22 in the second direction is bent inwardly towards the central axis of the groove body 22 at multiple different locations along the open top to form multiple connecting plates 26. In other words, these multiple connecting plates 26 are spaced apart and distributed on the groove body 22. When the cover plate 21 is sealed and assembled with the groove body 22, multiple second fasteners may be respectively inserted through the cover plate 21 and the multiple connecting plates 26. The cover plate 21 and the groove body 22 are assembled together by multiple fasteners and multiple connecting plates 26, so this design enhances the stability of the assembly between the cover plate 21 and the groove body 22. Additionally, since the connecting plates 26 are formed by horizontally bending the sidewall of the groove body 22 towards the central axis of the groove body 22, such a configuration further improves the mechanical strength of the entire accommodating member 2 in both the first direction and the second direction. Furthermore, since the connecting plate 26 is arranged parallel to the cover plates 21, when the cover plate 21 is connected to the connecting plates 26 by the second fasteners, a gap between the cover plate 21 and the groove body 22 may be minimized. Consequently, this ensures a tight connection between the cover plate 21 and each of the connecting plate 26 and the groove body 22, thereby improving the assembly effect between the cover plate 21 and the groove body 22.

The multiple connecting plates 26 may be spaced apart and arranged on the groove body 22 in the first direction, and the connecting plates 26 may be integrated with the groove body 22, thereby improving the mechanical strength of the groove body 22 in the first direction.

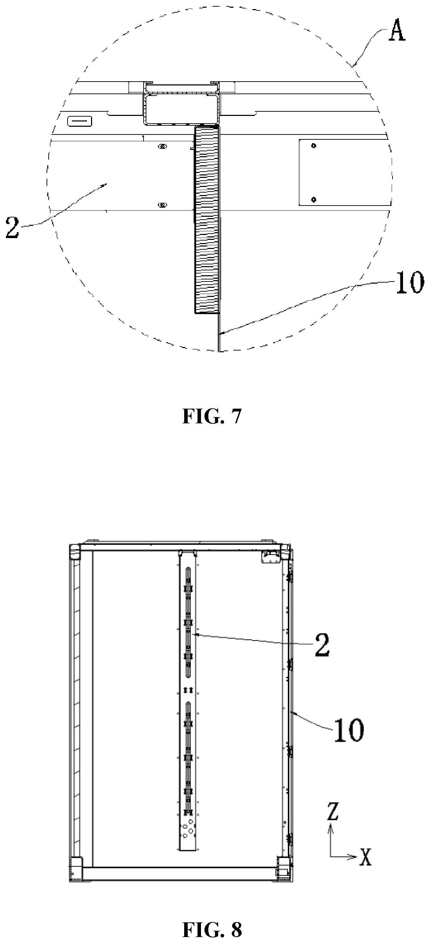

In an embodiment of the present application, as shown in FIGS. 1 and 7, when the accommodating member 2 is inserted through a partition wall 14 between the control cabin 12 and the battery cabin 11 adjacent thereto, the accommodating member 2 is connected to the partition wall 14 by seal welding.

The fire-fighting device 13 may include a temperature sensor, a smoke sensor, or the like. In FIG. 1, the control compartment 12 is located between two adjacent battery compartments 11. Two larger rooms may be defined as battery compartments, and the remaining room may serve as the control compartment 12 which is configured to accommodate a fire-fighting cabinet, a control cabinet, etc. At least one battery cabinet may be mounted inside each battery compartment. Fire-fighting devices 13 may be mounted on the cover plates 21 of the accommodating members 2 inside the above-mentioned battery compartments 11, respectively. When the total length of a single compartment or multiple compartments is greater than the length of a single accommodating member 2, multiple accommodating members 2 may be aligned and assembled end-to-end in the first direction to match the routing and mounting of the fire-fighting cables.

When the accommodating member 2 passes through the partition wall 14 between each battery compartment 11 and its adjacent control compartment 12, the accommodating member 2 may be connected to the partition wall 14 by seal welding. This not only achieve sealed communication between the battery compartments 11, but also prevents debris from entering an adjacent control compartment 12 from one battery compartment 11 along the connection between the accommodating member 2 and the partition wall 14. The hatched part in FIG. 7 represents the structure of the seal welding between the accommodating member 2 and the partition wall 14.

Furthermore, as illustrated in FIG. 8, when the accommodating member 2 is vertically mounted on the partition wall 14, a groove may be formed on a surface of the partition wall 14 to facilitate the mounting of the accommodating member 2 within the groove. This prevents the accommodating member 2 from protruding from the surface of the partition wall 14, achieving the concealed mounting of the accommodating member 2.

Although the present application has been disclosed as above, the protection scope of the present application is not limited thereto. Those skilled in the art may make various changes and modifications without departing from the spirit and scope of the present application, and these changes and modifications will fall within the protection scope of the present application.

## Claims

1. An energy storage system, **characterized by** comprising:
an energy storage cabinet (1); and
an accommodating member (2), which is arranged inside the energy storage cabinet (1) and is configured to accommodate at least two fire-fighting cables of different specifications;
wherein the accommodating member (2) is made of a fire-resistant and flame-retardant material.

2. The energy storage system according to claim 1, further comprising a partition plate (3), which is mounted inside the accommodating member (2) to separate the fire-fighting cables carrying high and low voltages.

3. The energy storage system according to claim 1, wherein the energy storage cabinet (1) comprises: a battery compartment (11), a battery cabinet, a control compartment (12), a control cabinet, and a fire-fighting device (13), wherein the battery cabinet is arranged in the battery compartment (11), the control cabinet is arranged in the control compartment (12), a portion of the accommodating member (2) is located in the battery compartment (11), and another portion of the accommodating member (2) is located in the control compartment (12); and
the accommodating member (2) is provided with a mounting site and a cable-passing hole (211), wherein the mounting site is configured for mounting the fire-fighting device (13), the cable-passing hole (211) is configured for passage of a fire-fighting cable connected to the fire-fighting device (13), and an end of the fire-fighting cable away from the fire-fighting device (13) extends into the control compartment (12) to be connected to the control cabinet.

4. The energy storage system according to claim 3, wherein the accommodating member (2) comprises a groove body (22) and a cover plate (21), wherein the groove body (22) is of a shell structure that is open at both ends in a first direction and a top thereof, the groove body (22) is configured for internally routing the fire-fighting cables, and the cover plate (21) is configured to cover the top of the groove body (22); and
a first mounting hole (212) is provided in the cover plate (21) at a position aligned with the mounting site, so that a first fastener is inserted through both the fire-fighting device (13) and the first mounting hole (212) to fix the fire-fighting device (13) onto the cover plate (21).

5. The energy storage system according to claim 4, wherein the accommodating member (2) further comprises a plurality of cable-fixing structures (23), which are configured to fix the fire-fighting cables,
at least some of the cable-fixing structures (23) are arranged in the groove body (22) and spaced apart in a direction perpendicular to the first direction, and
a distance between two adjacent cable-fixing structures (23) arranged in the direction perpendicular to the first direction, and/or a distance between a sidewall of the groove body (22) and the cable-fixing structure (23) adjacent to the sidewall is greater than a diameter of the corresponding fire-fighting cable.

6. The energy storage system according to claim 5, wherein each cable-fixing structure (23) is provided with a cable-tying hole, and/or a cable-tying hole is provided between each cable-fixing structure (23) and the groove body (22).

7. The energy storage system according to claim 6, wherein, in case that the cable-tying hole is provided between each cable-fixing structure (23) and the groove body (22), the cable-fixing structure (23) is a cable-tying rib formed by stamping and bending the groove body (22), and the cable-tying hole is formed between a bent part of the cable-tying rib and the groove body (22).

8. The energy storage system according to claim 4, comprising a plurality of the accommodating members (2), wherein
each accommodating member (2) further comprises an abutting plate (24) arranged at an end of the groove body (22) of the accommodating member (2) in the first direction, a sidewall of the groove body (22) is formed with a first notch (221) for passage of the fire-fighting cables, and the abutting plate (24) is formed with a second notch (241) for passage of the fire-fighting cables; and
when the groove body (22) of one accommodating member (2) is aligned and assembled at an angle with the groove body (22) of another accommodating member (2), the first notch (221) of the groove body (22) of the one accommodating member (2) is aligned with the second notch (241) of the groove body (22) of the another accommodating member (2); or when the groove bodies (22) of two adjacent accommodating members (2) are aligned and assembled end-to-end in the first direction, the second notches (241) of the groove bodies (22) of the two adjacent accommodating members (2) are aligned with and connected to each other.

9. The energy storage system according to claim 4, wherein the accommodating member (2) further comprises a sealing plate (25), the cover plate (21) is provided with an operation window (213), and the sealing plate (25) is detachably mounted at the operation window (213).

10. The energy storage system according to claim 4, wherein a sidewall of the groove body (22) is bent inwardly towards an interior of the groove body (22) at different locations along the open top to form a plurality of connecting plates (26), which are arranged parallel to the cover plate (21), so that a second fastener is inserted through both the cover plate (21) and the connecting plate (26) to fix the cover plate (21) onto the groove body (22).

11. The energy storage system according to claim 3, wherein the accommodating member (2) passes through a partition wall (14) between the control compartment (12) and the battery compartment (11) adjacent to the control compartment (12), and the accommodating member (2) is connected to the partition wall (14) by seal welding.
